# EUROPEAN PATENT SPECIFICATION

(11) **EP 2 922 975 B1**
(45) Date of publication and mention of the grant of the patent: **27.07.2016**
(21) Application number: 13792367.8
(22) Date of filing: 18.11.2013
(51) Int. Cl.: C21B 3/08, C04B 5/06

(54) **SLAG GRANULATION SYSTEM AND METHOD OF OPERATION**
SCHLACKENGRANULIERUNGSSYSTEM UND VERFAHREN ZUM BETRIEB
SYSTÈME DE GRANULATION DE LAITIER ET SON PROCÉDÉ DE FONCTIONNEMENT

(30) Priority: 23.11.2012 GB 201221122
(43) Date of publication of application: 30.09.2015
(73) Proprietor: Primetals Technologies Austria GmbH, 4031 Linz (AT)
(72) Inventor: FEATHERSTONE, William Barry, Guisborough TS14 8HZ (GB)
(74) Representative: Metals@Linz
(86) International application number: PCT/EP2013/074030
(87) International publication number: WO 2014/079797

(56) References cited:
- WO-A1-99/42623
- AT-A4- 508 672
- JP-A- S56 121 622
- US-A- 4 374 074
- US-A1- 2002 134 198

## Description

This invention relates to a slag granulation system and a method of operation, in particular for dry slag granulation with heat recovery.

The slag material may be of any type, for example, metal based, such as iron; a metal oxide, such as titanium oxide; a non-metal, such as slag generated as a byproduct of a metals production process; or a mixture thereof In the example of slag derived from a metals production process,

In conventional dry slag granulation, molten slag is delivered to a rotating disk in a granulation chamber via a pipe connected to a slag runner from the blast furnace. The size of the granulation chamber is dependent upon the distance required for the granulated slag to cool sufficiently so that the granulate does not stick to the walls of the chamber as the granulate impacts on the walls. Space is always at a premium in the blast furnace cast house, so it is desirable to be able to reduce the overall footprint of the granulation JP S56121622 A discloses a granulator consisting of a rotary target mounted on the top end of a vertical rotary shaft. A molten slag feed nozzle vertically extends down into the vessel to the centre of the target. A gas feed pipe is connected to the upper face of the vessel to feed compressed gas toward the target, so that the gas and scattered molten slag pass through a gap between the lower end of the feed pipe and the target, resulting in a smaller size device.

In accordance with a first aspect of the present invention a slag granulation system comprising a slag granulation device comprising a slag granulation chamber; a rotary atomising granulator to atomise molten slag, the granulator being mounted in the granulation chamber; and an air supply to supply air to the molten slag before the slag is atomised; wherein the system further comprises a slag delivery mechanism for delivering slag to the granulation chamber; wherein the slag delivery mechanism comprises a pipe connected to a slag inlet of the granulation chamber; and wherein the system further comprises an air lance mounted inside the pipe; an air supply coupled to an end of the lance remote from the granulation chamber; and a perforated section of the lance, remote from the air supply, whereby air is supplied to the molten slag.

The air supply to the molten slag expands rapidly to enhance atomisation of the slag.

Preferably, a flow control device is moveably mounted on the air lance. Preferably, the system further comprises a tundish coupled to the slag delivery mechanism and a flow control device mounted in the tundish.

Preferably, the separation of an outlet end of the slag delivery pipe and an upper surface of the rotary atomising granulator is less than 40 mm

This encourages the slag to flow onto the granulator disk and prevents the molten slag from bouncing, which may occur if there is a large drop.

Preferably, the system further comprises a process air supply inlet; a process air extraction outlet; and a heat recovery mechanism.

The system may have a heat recovery function, as well as granulation, by which process air flowed over the external surface of the molten slag during the granulation process is heated up and the heat can be recovered.

In accordance with a second aspect of the present invention, a method of operating a slag granulation process in a slag granulation device comprising a slag granulation chamber and a rotary atomising granulator mounted in the granulation chamber; the method comprising supplying air to a flow of molten slag; and granulating the molten slag in the granulation chamber; connecting a slag delivery mechanism comprising a pipe to a slag inlet of the granulation chamber and supplying molten slag to the slag granulation chamber through the pipe; mounting an air lance inside the pipe; coupling an air supply to an end of the lance remote from the granulation chamber; and supplying air to the molten slag via a perforated section of the lance, remote from the air supply.

Preferably, the method further comprises measuring speed of rotation of the disk; measuring diameter of samples of granulated slag; comparing the measure diameter with an expected diameter for a given speed of rotation; and adapting rate of flow of air into the molten slag in response.

Expanding the slag by supplying air allows lower cup speeds and longer time of flight over a shorter distance, thereby reducing the overall footprint of the system, but too large a granulated slag particle size results in particles which may not be glassy in the centre, so the air flow must be adapted accordingly.

Preferably, the method further comprises flowing process air through the granulation chamber to cool the granulated slag and extracting heat from the process air in a heat recovery facility.

Preferably, the method further comprises moving a flow control device through a range of positions to control slag flow rate through the slag delivery mechanism.

An example of a slag granulation system and method of operation according to the present invention will now be described with reference to the accompanying drawings in which:
Figure 1 illustrates a device for dry slag granulation with heat recovery;
Figure 2 illustrates a device for dry slag granulation according to the present invention with heat recovery;
Figures 3a and 3b illustrate in detail a stopper device for use with the present invention;
Figures 4a and 4b illustrate in detail a embodiments of the present invention; and,
Figures 5a and 5b illustrate in detail an air source for use with the present invention.
Figure 6 illustrates a method of controlling slag flow rate during granulation in the device of Fig. 1

In a conventional dry method for granulating molten slag, slag is discharged from a slag runner on to a rotating atomiser device which may be in the form of a flat disk or a shallow cup or dish. The slag is atomised at the edge of the disk and the resulting slag droplets partially cool to the point where they have a sufficiently robust shell that they do not stick on impact with the surrounding inclined water cooled wall. After impact the slag falls into an air cooled bed where further cooling takes place before discharge.

However, it is desirable to be able to reduce the footprint of the granulation chamber and to enhance the effectiveness of the atomisation during slag granulation.

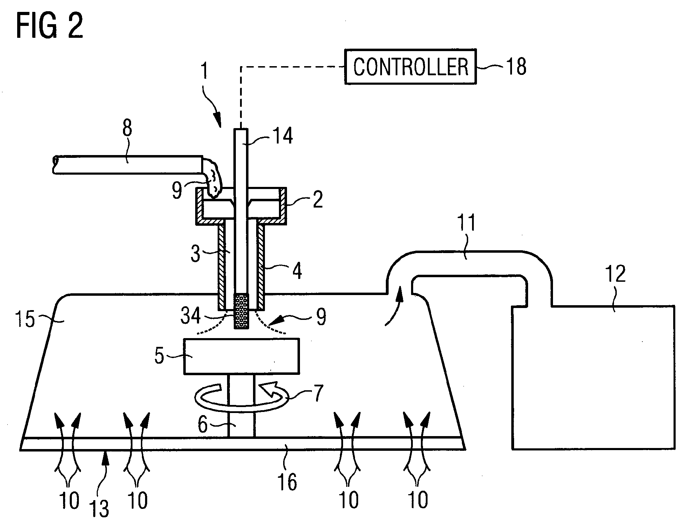

Fig.2 shows a device for dry slag granulation according to the present invention with heat recovery. A rotary atomising granulator comprising a rotating element 5, typically a disk or dish, rotating on a drive shaft 6 in the direction of arrow 7 is mounted in a granulation chamber 13. A series of air inlets 10 and an air outlet 11 provide a path for air flow through the granulation chamber 13 to a heat exchanger 12 for heat recovery. The chamber is provided with water cooled walls 15 and a cooled bed 16. As illustrated in this example, a vertical, refractory lined slag delivery pipe 4 coupled via an outlet 3 of a tundish 2 receives slag 9 from a slag runner 8. Mounted within the pipe 4 is an air lance 14 connected to an air supply (not shown) and a controller 18 to control supply of air to the lance. At an end of the lance remote from the air supply, a perforated section 34 of the air lance allows air to enter the slag 9.

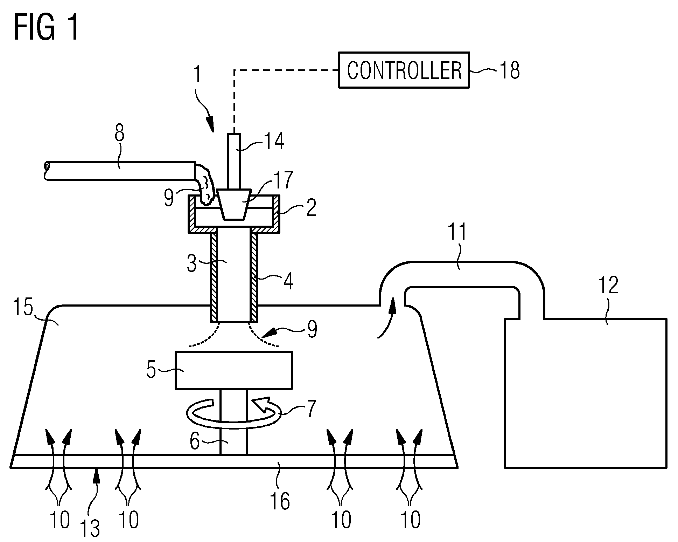

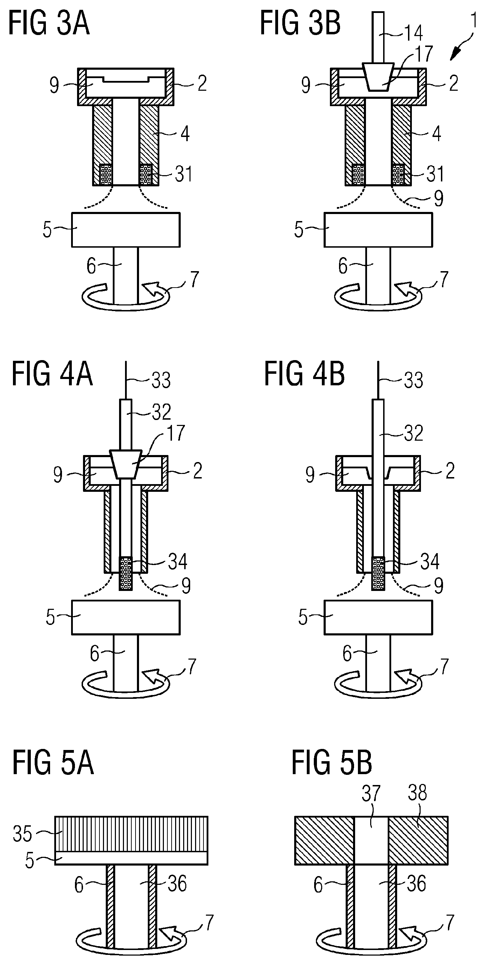

Figs.3 to 5 illustrate features which may be used in a dry slag granulation system such as is described with respect to Fig. 1 below and Fig.2, with, or without, the heat recovery shown in those figures. The system comprises a slag supply, typically via the slag runner 8 from a blast furnace (not shown) to the refractory lined slag delivery pipe 4. A tundish or trough 2 may be used to help regulate the supply, or the slag runner may supply to the delivery pipe directly. The examples of Figs. 1, 2, 3a, 3b, 4a and 4b all illustrate a tundish, but if flow rate control is not required, this may be omitted.

Fig.3a illustrates a basic example of flow control which may be used with the system of the present invention, in which slag 9 in the tundish 2 is fed through the slag delivery pipe 4 to a rotating disk 5 of a rotary atomising granulator in a slag granulation chamber. The disk rotates on a shaft 6 in the direction of the arrow 7. This example also shows the option of aerating the molten slag with an air supply to improve the efficiency of the atomisation during granulation via a section of the slag delivery pipe. An external compressed air supply from a compressor pipe via a flexible pipe (not shown), is provided to the molten slag through a porous section 31 of the pipe, which may be at the end adjacent to the granulator and remote from the source of the molten slag. The air may be injected into the slag flow through either a porous plug, as illustrated in Figs.3a and 3b, or through radial injection holes. The end of the slag delivery device is typically less than 40mm from an upper surface of the rotary atomising granulator, to prevent the molten slag from bouncing as it hits the granulator. Fig.3b illustrates how a slag flow rate control device described in more detail below may be incorporated into the granulation system, with a stopper 17 moveable by a rod 14 under the control of controller 18 as illustrated in Fig.1. The optional stopper rod is totally independent of the air injection method.

The system incorporating a slag air supply mechanism according to the present invention is illustrated in Figs. 4a and 4b. Fig.4a shows a compressed air injection lance 32 that allows air from the compressor to be directed via pipe 33 and the lance 32 and injected into the centre of the slag stream in the slag delivery pipe 4. This may be via a porous section 34 fitted at the end of the pipe closest to the rotating atomising device, or alternatively, instead of the porous plug or end hole, the lance may have small holes distributed along its length through which air is injected into the slag, or may have holes in the lance only at the end nearest the granulator. Compressed air is supplied via the supply line 33 at the top of the lance and may be controlled by the controller 18. In the example of Fig.4b, the air injection lance 32 is combined with an optional flow control device 17 mounted on the lance to control the slag flow rate to the slag delivery pipe 4. Although illustrated as a stopper and rod, other types of flow control as described with respect to Fig. 1 may be used. The construction is such that the injection lance 32 and the stopper 17 can be moved independently, for example by sliding movement of the stopper on the injection lance. Air from the remote supply 33 is injected down the lance 32 and exits into the slag stream 9 through the end section 34. The end section may be open ended or preferably takes the form of a porous plug. Alternatively, the lance may have a closed end with a series of radial holes in place of the porous plug, or the holes may be in a blanking plate at the end of the lance. The preferred version depends upon the intended application and the design flow rate of the slag.

In Fig.5a, another mechanism for supplying air to the slag is illustrated. The rotating disk 5 of the atomiser may be supplied with slag directly via a slag delivery pipe and optionally include a flow control device, so these are not shown, Although air may be supplied directly to the edge of the granulator, or in the slag delivery pipe, in this example compressed air is delivered through a porous plug 35 in the top of the rotating atomiser, rather than in the slag delivery pipe. The porous plug may have the same diameter as the rotating disk, and air may be delivered to the top of the porous plug of the rotating device, to the centre, to the edges, or to the whole of the top surface. The air may be supplied through a channel 36 in the rotating support 6. A preferred embodiment is to supply the air through a central porous refractory pad 37 of an otherwise metallic rotating dish 38 (shown in Fig.5b), via the channel 36 in the rotating support 6.

The supply of air to the molten slag in the slag delivery pipe enhances atomisation via the expansion of the air as it exits the air pipe and rapidly acquires the slag temperature. Although the air temperature rises to some extent as the air travels down the lance or other delivery system, the air remains much cooler than the slag. On injection into the slag the air expands rapidly enhancing the atomisation of the slag and quickly acquires equilibrium temperature with the slag. As mentioned before, the slag droplets must acquire a nearly solid surface before making contact with a surface of a wall of the granulation chamber at a distance from the rotating disk, in order to avoid sticking to that surface. The enhanced atomisation due to the injected air allows the rotating atomising device to be operated at a lower speed for the same slag droplet size, reducing the distance necessary for in-flight cooling of the slag droplets. This allows the sloping granulator chamber walls to be positioned closer to the rotating atomiser, resulting in a chamber of a smaller diameter, needing less air for granulate handling and enabling a higher air temperature to be achieved at the granulation system air exit duct 11, if a heat recovery mechanism 12 is being used. Determining whether or not the air supply is correct may involve measuring the speed of rotation of the disk and the average slag granule diameter, comparing the measured diameter with that expected for the speed of rotation and adapting the air supply accordingly.

The use of a flow control device as described in GB2508199 for controlling the flow rate of molten slag on to the rotating element, may additionally be used with the present invention. When using the embodiments of Figs.3a and 4a with a flow control device, the advantage of a more controllable slag flow is achieved, thereby preventing air passage into the slag delivery pipe which reduces the loss of hot air and so improves the heat recovery efficiency. Even without this feature, the present invention enhances the atomisation of the slag by introducing air into the granulating process. In the examples of Figs.3, 4 and 5, it is possible to operate without the flow control device, but with the atomisation enhancement of the invention. Similarly, although the examples are described with respect to a dry slag granulation device with heat recovery, they could also be used in a straightforward dry slag granulation system, without a heat recovery mechanism. The various examples for injecting air into the molten slag may be used individually or in combination.

The design of a typical dry slag granulation device is such that the air temperature leaving the granulating enclosure is sufficiently high to allow valuable heat recovery in the form of hot process air for drying etc or for steam generation. In turn, the steam may be used for electricity generation. In the case of blast furnace slag, the granulate has a very high proportion of glassy slag, making it suitable for cement production.

To allow for variations in slag flow rate, particularly when the granulator is connected directly to the end of the furnace slag runner, the refractory lined slag delivery pipe directing the slag onto the rotating disk is typically oversized. Hence, the delivery pipe does not run full. The granulator chamber is typically run under positive pressure, resulting in a loss of hot air and reduced heat recovery. Similarly, if the granulator chamber were to be run under suction, cold air would be drawn in, resulting in a similar loss of recovered heat. The magnitude of the heat loss in either case depends upon the operating chamber pressure and the free space in the slag delivery pipe.

As described in GB2508199andGB2508201 and in the example of Fig.1, a rotary atomising granulator comprising a rotating element 5, typically a disk or dish, rotating on a drive shaft 6 in the direction of arrow 7 is mounted in a granulation chamber 13. An air inlet 10 and air outlet 11 provide a path for air flow through the granulation chamber 13 to a heat exchanger 12. The chamber is provided with water cooled walls 15 and a cooled bed 16. A vertical, refractory lined slag delivery pipe 4 coupled via an outlet 3 of a tundish 2 receives slag 9 from a slag runner 8. A flow control device 1, in this example a stopper rod in the form of a conical plug, is movably mounted in the tundish.

The moveable conical plug adjusts the flow rate, so that when the slag starts to solidify, more flow is permitted to prevent solidified slag from blocking the pipe. High flow rates are typically in the range of 2 to 6 tonnes per minute.

The flow rate control also improves the efficiency of the heat recovery process by applying slag flow control during dry granulation of slag. By controlling the slag flow using the flow control device , a slag seal between the flow control device 1 and the tundish outlet 3 is formed, preventing air passage through the slag delivery pipe 4, so avoiding loss of hot air from the granulation chamber, or ingress of cold air into the chamber. The flow control device is positioned above the outlet 3 of the tundish 2, which is typically refractory lined, containing molten slag 3. The flow control device 1 shown in Fig. 1 takes the form of an actuator rod 14 connected to a stopper 17 which, in this example, is a frustum of a cone, although other shapes of flow control device may be used to reduce the cross section of slag so as to form the slag seal. The outlet 3 from the tundish 2 and the tube 4 are also typically refractory lined. Molten slag 9 is delivered from the tube 4 onto the rotating element 5. At the rim of the rotating element 5, the slag is atomised. The refractory lined tube 4 is designed to convey the maximum design slag flow rate on to the rotating element 5. The slag properties, such as head calculations, depth of slag to size of opening and cross section may be used to determine this, but as slag solidifies in the tube, the cross section changes, hence the need for an oversize tube. Moving the stopper 17 away from the tundish outlet 3 by raising the rod 14 allows an increased slag flow to pass through the tube 4. The flow control device 1 is constrained to move under the influence of a control system 18 to maintain a slag level in the tundish 2, thus providing a seal to prevent air passing through the tube 4.

When the surface of the slag is heated using e.g. a hood burner (not shown) and blast furnace gas, the temperature of the surface of the slag is maintained to prevent formation of a crust of solidified slag, but allow a slag seal between the stopper and the molten slag in the tundish to form. Then a level sensor (not shown) in the tundish may be used to provide data to the controller. As the level drops to its lowest allowable level, the stopper is moved closer to the outlet 3 to prevent air passage past the stopper. As the level increases, the stopper 17 can be moved further away from the outlet without the slag seal being compromised and can then be used to control the slag flow rate. Where there is no heating of the surface of the slag in the tundish, the formation of the slag crust prevents a level sensor from being effective. In this case, weight of the tundish may be used to provide control data. This in combination with the position of the stopper itself enables the controller to move the stopper as required.

This arrangement enables a more controllable slag flow and prevents air passage into the slag delivery pipe, either from the outside, or from the slag chamber, resulting in a reduction cooling air entering or hot air being lost and therefore an improvement in heat recovery efficiency.

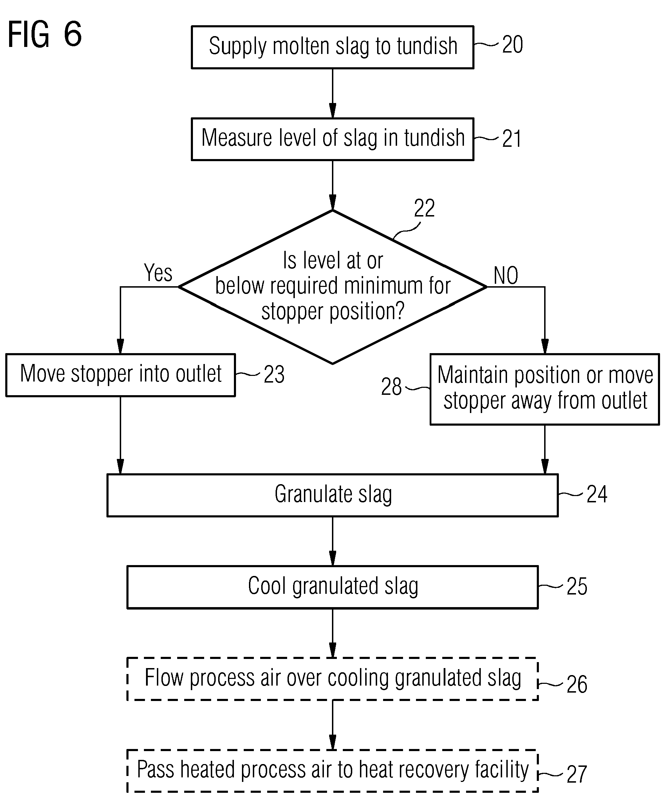

Fig. 6 is a flow diagram illustrating the method of the device of Fig.1. Molten slag is supplied 20 to a tundish. The level of molten slag or weight of the tundish and position of the flow control stopper are monitored 21 by sensors in the tundish, or a tundish weighing system and the level, or weight and position reported back to the controller 18. A comparison 22 is made with a required minimum level for a given stopper position and if the level is at or below the minimum required for that stopper position, then the stopper is moved 23 closer to the outlet 3. If the stopper is not at or below the minimum, then it may be moved away from the outlet in order to increase the flow rate to the granulator and to control the slag flow to the granulator. The slag flowing onto the granulator is granulated 24 and cooled 25. For dry slag granulation, the additional steps of flowing 26 process air over the slag as it is cooled and passing 27 the heated air to a heat recovery facility are then carried out. For dry slag granulation, the mechanism of measuring power or current of the rotary atomising granulator drive motor described in GB2508201 may be used to provide feedback to the controller for flow control.

## Claims

1. A slag granulation system (1) comprising a slag granulation device, the device comprising a slag granulation chamber (13), a rotary atomising granulator (5) to atomise molten slag, the granulator being mounted in the granulation chamber; and an air supply to supply air to the molten slag before the slag is atomised; wherein the system further comprises a slag delivery mechanism for delivering slag to the granulation chamber; wherein the slag delivery mechanism comprises a pipe (4) connected to a slag inlet of the granulation chamber; and wherein the system further comprises an air lance (14) mounted inside the pipe; an air supply coupled to an end of the lance remote from the granulation chamber; and a perforated section (31, 34) of the lance, remote from the air supply, whereby air is supplied to the molten slag.

2. A system according to claim 1, wherein a flow control device (32, 33, 17) is moveably mounted on the air lance.

3. A system according to claim 1 or claim 2, further comprising a tundish (2) coupled to the slag delivery mechanism and a flow control device mounted in the tundish.

4. A system according to any of claims 1 to 3, wherein the separation of an outlet end of the slag delivery pipe and an upper surface of the rotary atomising granulator is less than 40 mm.

5. A system according to any of claims 1 to 4, wherein the system further comprises a process air supply inlet (10), a process air extraction outlet (11), and a heat recovery mechanism (12).

6. A method of operating a slag granulation process in a slag granulation device comprising a slag granulation chamber and a rotary atomising granulator mounted in the granulation chamber; the method comprising supplying air to a flow of molten slag; and granulating the molten slag in the granulation chamber; connecting a pipe to a slag inlet of the granulation chamber and supplying molten slag to the slag granulation chamber through the pipe; supplying the air to the molten slag in the pipe; mounting an air lance inside the pipe; coupling an air supply to an end of the lance remote from the granulation chamber; and supplying air to the molten slag via a perforated section of the lance, remote from the air supply.

7. A method according to claim6, further comprising measuring speed of rotation of the disk; measuring diameter of samples of granulated slag; comparing the measure diameter with an expected diameter for a given speed of rotation; and adapting rate of flow of air into the molten slag in response.

8. A method according to claim 6 or claim 7, further comprising flowing process air through the granulation chamber to cool the granulated slag and extracting heat from the process air in a heat recovery facility.

9. A method according to any of claims 6 to 8, further comprising moving a flow control device through a range of positions to control slag flow rate through the slag delivery mechanism.

## Patentansprüche

1. Schlackengranulationssystem (1),
umfassend eine Schlackengranulationsvorrichtung, wobei die Vorrichtung eine Schlackengranulationskammer (13), einen Rotationszerstäubungsgranulator (5) zum Zerstäuben von geschmolzener Schlacke, wobei der Granulator in der Granulationskammer angebracht ist; und eine Luftzufuhr zum Zuführen von Luft zu der geschmolzenen Schlacke, bevor die Schlacke zerstäubt wird, umfasst; wobei das System ferner einen Schlackenzuführmechanismus zum Zuführen von Schlacke zu der Granulationskammer umfasst; wobei der Schlackenzuführmechanismus ein Rohr (4) umfasst, das mit einem Schlackeneinlass der Granulationskammer verbunden ist; und wobei das System ferner ein Luftstrahlrohr (14) umfasst, das innerhalb des Rohrs angebracht ist; und eine Luftzufuhr, die an ein Ende des Strahlrohrs entfernt von der Granulationskammer gekoppelt ist; und einen perforierten Abschnitt (31, 34) des Strahlrohrs entfernt von der Luftzufuhr, wodurch Luft zu der geschmolzenen Schlacke zugeführt wird.

2. System gemäß Anspruch 1, wobei an dem Luftstrahlrohr eine Flusssteuerungsvorrichtung (32, 33, 17) beweglich angebracht ist.

3. System gemäß Anspruch 1 oder Anspruch 2, ferner umfassend einen Zwischenbehälter (2), der mit dem Schlackenzuführmechanismus gekoppelt ist, und eine in dem Zwischenbehälter angebrachte Flusssteuerungsvorrichtung.

4. System gemäß einem der Ansprüche 1 bis 3, wobei die Trennung des Auslassendes des Schlackenzufuhrrohrs und der oberen Oberfläche des Rotationszerstäubungsgranulators weniger als 40 mm beträgt.

5. System gemäß einem der Ansprüche 1 bis 4, wobei das System ferner einen Prozessluft-Zufuhreinlass (10), einen Prozessluft-Absaugauslass (11); und einen Wärmerückgewinnungsmechanismus (12) umfasst.

6. Verfahren zum Betreiben eines Schlackengranulationsverfahrens in einer Schlackengranulationsvorrichtung, die eine Schlackengranulationskammer und einen Rotationszerstäubungsgranulator, der in der Granulationskammer angebracht ist, umfasst; wobei das Verfahren das Zuführen von Luft zu einem Strom von geschmolzener Schlacke; und Granulieren der geschmolzenen Schlacke in der Granulationskammer; Verbinden eines Rohrs mit einem Schlackeneinlass der Granulationskammer und Zuführen von geschmolzener Schlacke zu der Schlackengranulationskammer durch das Rohr; Zuführen der Luft zu der geschmolzenen Schlacke in dem Rohr; Anbringen eines Luftstrahlrohrs im Inneren des Rohrs; Koppeln einer Luftzufuhr an ein Ende des Strahlrohrs entfernt von der Granulationskammer; und Zuführen von Luft zu der geschmolzenen Schlacke über einen perforierten Abschnitt des Strahlrohrs entfernt von der Luftzufuhr umfasst.

7. Verfahren gemäß Anspruch 6, ferner umfassend das Messen der Rotationsgeschwindigkeit der Scheibe; Messen des Durchmessers von Proben der granulierten Schlacke; Vergleichen des gemessenen Durchmessers mit einem erwarteten Durchmesser für eine gegebene Rotationsgeschwindigkeit; und in Antwort darauf Anpassen der Flussrate von Luft in die geschmolzene Schlacke.

8. Verfahren gemäß Anspruch 6 oder Anspruch 7, ferner umfassend das Leiten von Prozessluft durch die Granulationskammer zum Kühlen der granulierten Schlacke und Gewinnen von Wärme aus der Prozessluft in einer Wärmerückgewinnungsanlage.

9. Verfahren gemäß einem der Ansprüche 6 bis 8, ferner umfassend das Bewegen einer Flusssteuerungsvorrichtung durch einen Bereich von Positionen, um die Schlackenflussrate durch den Schlackenzuführmechanismus zu steuern.

## Revendications

1. Système de granulation de laitier (1) comprenant un dispositif de granulation de laitier, le dispositif comprenant une chambre de granulation de laitier (13), un granulateur d'atomisation rotatif (5) pour atomiser un laitier fondu, le granulateur étant monté dans la chambre de granulation ; et un approvisionnement en air pour approvisionner en air le laitier fondu avant que le laitier soit atomisé ; dans lequel le système comprend en outre un mécanisme de distribution de laitier pour distribuer un laitier à la chambre de granulation ; dans lequel le mécanisme de distribution de laitier comprend un tuyau (4) connecté à une admission de laitier de la chambre de granulation ; et dans lequel le système comprend en outre une lance à air (14) montée à l'intérieur du tuyau ; un approvisionnement en air couplé à une extrémité de la lance à distance de la chambre de granulation ; et une section perforée (31, 34) de la lance, à distance de l'approvisionnement en air, moyennant quoi le laitier fondu est approvisionné en air.

2. Système selon la revendication 1, dans lequel un dispositif de contrôle d'écoulement (32, 33, 17) est monté de manière mobile sur la lance à air.

3. Système selon la revendication 1 ou la revendication 2, comprenant en outre un panier de coulée (2) couplé au mécanisme de distribution de laitier et un dispositif de contrôle d'écoulement monté dans le panier de coulée.

4. Système selon l'une quelconque des revendications 1 à 3, dans lequel la séparation d'une extrémité d'évacuation du tuyau de distribution de laitier et d'une surface supérieure du granulateur d'atomisation rotatif est inférieure à 40 mm.

5. Système selon l'une quelconque des revendications 1 à 4, dans lequel le système comprend en outre une admission d'approvisionnement en air de traitement (10), une évacuation d'extraction d'air de traitement (11) ; et un mécanisme de récupération de chaleur (12).

6. Procédé d'exploitation d'un processus de granulation de laitier dans un dispositif de granulation de laitier comprenant une chambre de granulation de laitier et un régulateur d'atomisation rotatif monté dans la chambre de granulation ; le procédé comprenant l'approvisionnement en air d'un écoulement de laitier fondu ; et la granulation du laitier fondu dans la chambre de granulation ; la connexion d'un tuyau à une admission de laitier de la chambre de granulation et l'approvisionnement de la chambre de granulation de laitier en laitier fondu à travers le tuyau ; l'approvisionnement du laitier fondu en air dans le tuyau ; le montage d'une lance à air à l'intérieur du tuyau ; le couplage d'un approvisionnement en air à une extrémité de la lance à distance de la chambre de granulation ; et l'approvisionnement en air du laitier fondu par l'intermédiaire d'une section perforée de la lance, à distance de l'approvisionnement en air.

7. Procédé selon la revendication 6, comprenant en outre la mesure de la vitesse de rotation du disque ; la mesure du diamètre des échantillons de laitier granulé ; la comparaison du diamètre mesuré à un diamètre prévu pour une vitesse de rotation donnée ; et l'adaptation de la vitesse d'écoulement de l'air dans le laitier fondu en réaction.

8. Procédé selon la revendication 6 ou la revendication 7, comprenant en outre l'écoulement d'un air de traitement à travers la chambre de granulation pour refroidir le laitier granulé et l'extraction de la chaleur de l'air de traitement dans une installation de récupération de chaleur.

9. Procédé selon l'une quelconque des revendications 6 à 8, comprenant en outre le déplacement d'un dispositif de contrôle d'écoulement à travers une série de positions pour contrôler le débit du laitier à travers le mécanisme de distribution de laitier.
